# EUROPÄISCHE PATENTSCHRIFT

(11) **EP 3 642 954 B1**
(45) Veröffentlichungstag und Bekanntmachung des Hinweises auf die Patenterteilung: **25.08.2021**
(21) Anmeldenummer: 18732741.6
(22) Anmeldetag: 19.06.2018
(51) Int. Cl.: H02S 10/40

(54) **MOBIL UND AUTARK EINSETZBARE EINRICHTUNG ZUR EINERGIEUMWANDLUNG VON SONNENENERGIE IN ELEKTRISCHE ENERGIE MIT EINEM CONTAINER**
MOBILE AND SELF-SUFFICIENT DEVICE FOR CONVERTING SOLAR ENERGY TO ELECTRICAL ENERGY, COMPRISING A CONTAINER
DISPOSITIF MOBILE DE CONVERSION D'ÉNERGIE SOLAIRE EN ÉNERGIE ÉLECTRIQUE POUVANT ÊTRE INSTALLÉ DE MANIÈRE AUTONOME ET MUNI D'UN CONTENEUR

(30) Priorität: 20.06.2017 DE 102017210292
(43) Veröffentlichungstag der Anmeldung: 29.04.2020
(73) Patentinhaber: Gicon Grossmann Ingenieur Consult GmbH, 01219 Dresden (DE)
(72) Erfinder: GROSSMANN, Jochen, 01187 Dresden (DE); DANZ, Bernd, 01309 Dresden (DE)
(74) Vertreter: Kailuweit & Uhlemann Patentanwälte Partnerschaft mbB
(86) Internationale Anmeldenummer: PCT/EP2018/066182
(87) Internationale Veröffentlichungsnummer: WO 2018/234269

(56) Entgegenhaltungen:
- WO-A1-2009/103974
- GB-A- 2 543 581
- US-A1- 2010 206 354
- US-A1- 2011 049 992
- US-A1- 2011 146 751
- US-A1- 2016 036 375

## Beschreibung

Die Erfindung betrifft mobil und autark einsetzbare Einrichtungen zur Energieumwandlung von Sonnenenergie in elektrische Energie mit in Platten angeordneten Solarmodulen und einem Container.

Durch die Druckschrift DE 10 2010 022 966 A1 ist eine Kleinstenergiehybridstation bekannt. Dazu ist ein Container auf einem Kugeldrehkranz angeordnet. Auf dem Container befinden sich mindestens eine Photovoltaikfläche und ein Solarspiegel mit einem Zweikreisabsorber. Weiterhin weist der Container ein Rohr mit einem Windrad auf. Zur Energieumwandlung der Sonnenenergie in elektrische Energie muss der Container entsprechend dem Sonnenstand gedrehtwerden. Die Photovoltaikfläche ist durch Anordnung auf dem Container beschränkt, so dass die zu gewinnende Nutzenergie begrenzt ist.

Die Druckschrift WO 2008/ 083 219 A2 offenbart ein autarkes Kraftwerk mit Solarmodulen und/oder Windturbinen. Die verwendeten Solarmodule sind Bestandteile eines Containers, können von diesem abgeklappt und aus dem Container herausgezogen werden. Die Größe der Solarmodule ist dabei auf die Größe des Containers beschränkt.

Die Druckschrift EP 2 822 178 A1 offenbart eine mobile Solarinselanlage mit flächigen photovoltaischen Solarmodulen, einem Energiespeicher und einem mit den Solarmodulen und dem Energiespeicher verbundenen Laderegler. Die Solarmodule an sich können winklig zum Container und/oder zur Standfläche angeordnet werden. Die Größe der Solarmodule ist auf die Größe des Containers begrenzt.

Die Druckschrift US 2014 / 0 285 005 A1 beinhaltet eine mobile Stromversorgungseinrichtung mit Solarmodulen auf einem Anhänger zur Verbindung mit einem Kraftfahrzeug. Die Größe der Solarmodule ist auf die Größe des Anhängers beschränkt.

Das Dokument US 2010/206354 A1 offenbart eine Mobil und autark einsetzbare Einrichtung zur Energieumwandlung von Sonnenenergie in elektrische Energie. Der im Patentanspruch 1 angegebenen Erfindung liegt die Aufgabe zugrunde, mobil und autark einsetzbare Einrichtungen zur Energieumwandlung von Sonnenenergie in elektrische Energie mit in Platten angeordneten Solarmodulen und einem Container insbesondere auch für große Energie einfach zu schaffen.

Diese Aufgabe wird mit den im Patentanspruch 1 aufgeführten Merkmalen gelöst.

Die mobil und autark einsetzbare Einrichtungen zur Energieumwandlung von Sonnenenergie in elektrische Energie mit in Platten angeordneten Solarmodulen und einem Container zeichnen sich insbesondere dadurch aus, dass eine große elektrische Energie bereitstellbar ist.

Dazu weist die Platte mit Solarmodulen wenigstens zwei gegeneinander klappbare Teilplatten mit Solarmodulen auf. Weiterhin befindet sich schwenkbar beidseitig an einem ersten Rahmen jeweils eine Platte mit Solarmodulen, wobei im aufgeklappten Zustand der erste Rahmen ein Ständer der schräg angeordneten und eine Satteldachform ausbildenden Platten mit Solarmodulen ist. Der erste Rahmen mit Platten mit Solarmodulen ist in oder an einem zweiten Rahmen mit beidseitig schwenkbaren Platten mit Solarmodulen verschiebbar angeordnet, so dass im auseinander geschobenen Zustand die Rahmen mit den schräg angeordneten Platten mit Solarmodulen die Form eines Satteldaches und im ineinander geschobenen Zustand die Rahmen mit angeklappten Platten mit angeklappten Teilplatten jeweils mit Solarmodulen die Form eines Quaders vorhanden ist. Der zweite Rahmen ist weiterhin gelenkig mit einem geführten Halteelement des Containers zum Bewegen der Rahmen mit den Platten mit den Solarmodulen in den und aus den Container verbunden, so dass die Rahmen mit den Platten mit Solarmodulen senkrecht im Container angeordnet und außerhalb des Containers gegenüber dem Container schwenkbar sind.

Die zusammen und an die Rahmen geklappten Platten als eine erste Anordnung befinden sich im Transportzustand mit minimalen Platzbedarf vertikal im Container. Vor Ort werden die Rahmen aus dem Container herausgezogen. Mittels des Gelenks können die Rahmen geschwenkt werden. Damit können insbesondere auch zwei Anordnungen als erste und zweite Anordnung nach einer Seite des Containers herausgezogen werden. Durch die Gelenke können die Anordnungen voneinander weg geschwenkt werden, so dass die seitlichen Plätze neben dem Container zum Aufklappen der Platten mit Solarmodulen nutzbar sind, ohne dass sich diese überschneiden können. Das kann natürlich auch mit vier Anordnungen erfolgen, wobei jeweils zwei Anordnungen einseitig aus dem Container gezogen und voneinander weg geschwenkt werden können. In der Draufsicht ist damit eine H-Form realisiert, wobei die Platten mit den Solarmodulen die Schenkel und der Container das Mittelteil der H-Form sind. Damit ist eine optimale nutzbare Fläche für die Platten mit den Solarmodulen neben dem Container vorhanden. Es können weiterhin auch darüber hinaus Platten in Längsrichtung des Containers herausgezogen und aufgeklappt werden. So können sechs Anordnungen am Container platziert werden.

Vorteilhafterweise kann das Gelenk ein Kugelgelenk sein, so dass die Anordnungen auch leicht im unebenen Gelände am Container aufgebaut werden können.

Die aufgeklappten Platten mit den Solarmodulen bilden Satteldächer aus, wobei die Breite der Platten kleiner als die Höhe des Rahmens ist. Durch eine bestimmte Platzierung des Containers im Gelände kann damit eine optimale Bestrahlung bei sich drehender Erde sichergestellt werden. Es ist dabei immer sichergestellt, dass wenigstens eine Seite des Satteldaches mit Sonnenstrahlen beaufschlagt wird.

Vorteilhafte Ausgestaltungen der Erfindung sind in den Patentansprüchen 2 bis 11 angegeben.

Nach der Weiterbildung des Patentanspruchs 2 sind vier zweite Rahmen mit jeweils einem ersten Rahmen und Platten mit Solarmodulen im oder am Container angeordnet. Im aufgebauten Zustand der Einrichtung bilden die auseinandergezogenen Rahmen und die aufgeklappten Platten mit Solarmodulen in der Draufsicht eine H-Form mit den Platten als Schenkel und dem Container als Mittelteil.

Jeweils zwei zweite Rahmen mit jeweils einem ersten Rahmen und Platten mit Solarmodulen sind nach der Weiterbildung des Patentanspruchs 3 hintereinander oder nebeneinander an einer Seitenwand des Containers angeordnet, wobei der Container ein zweiseitig öffenbarer Container ist. Besonders mit einer Anordnung nebeneinander, kann die Länge des Containers so ausgenutzt werden, dass acht Rahmen mit Platten mit Solarmodulen im Container platzierbar sind.

Im Container befindet oder befinden sich nach der Weiterbildung des Patentanspruchs 4 wenigstens eine Schiene für das Drehgelenk und/oder den ersten Rahmen und/oder den zweiten Rahmen. Weiterhin besitzt oder besitzen der erste Rahmen und/oder der zweite Rahmen Rollen oder Räder. Damit können die Rahmen leicht per Hand aus den Container gezogen oder in den Container geschoben werden.

Die Einrichtung zur Energieumwandlung weist nach der Weiterbildung des Patentanspruchs 5 wenigstens eine Windkraftanlage und/oder mindestens einen Akkumulator auf. Mittels der Windkraftanlage kann auch bei keinem Sonnenschein und bei Wind elektrische Energie aus der Windkraft gewandelt werden. Der Akkumulator ist ein bekannter elektrischer Energiespeicher, in dem nicht gebrauchte gewandelte elektrische Energie speicherbar ist.

Solarmodule und/oder Solarmodule in Verbindung mit einem Solarwechselrichter sind nach der Weiterbildung des Patentanspruchs 6 Bestandteile eines Stromkreises. Die Solarmodule stellen eine Gleichspannung bereit, so dass damit ein Gleichspannungsnetz vorhanden ist. Mittels des Solarwechselrichters wird eine Wechselspannung für bekannte und handelsübliche Verbraucher bereitgestellt. Besondere Ausführungen der Verbraucher sind nicht notwendig.

Eine Steuereinrichtung und wenigstens ein elektrisches Heizelement sind nach der Weiterbildung des Patentanspruchs 7 weitere Bestandteile des Stromkreises.

In Fortführung ist das elektrische Heizelement nach der Weiterbildung des Patentanspruchs 8 ein Bestandteil eines Wasserspeichers, so dass den Nutzern der Einrichtung erwärmtes Wasser zur Verfügung steht.

Eine Steuereinrichtung und ein Ladegerät in Verbindung mit dem Akkumulator sind nach der Weiterbildung des Patentanspruchs 9 weitere Bestandteile des Stromkreises. Mittels des Ladegeräts wird nicht benötigte Energie der Einrichtung im Akkumulator gespeichert. Das Ladegerät kann dazu ein solches in einem Wechselspannungsnetz oder Gleichspannungsnetzes sein.

Der Akkumulator, eine Steuereinrichtung und ein Wechselrichter und/oder ein Gleichrichter sind nach der Weiterbildung des Patentanspruchs 10 weitere Bestandteile des Stromkreises.

Eine Steuereinrichtung und der Windgenerator der Windkraftanlage sind nach der Weiterbildung des Patentanspruchs 11 weitere Bestandteile des Stromkreises.

Ein Ausführungsbeispiel der Erfindung ist in den Zeichnungen jeweils prinzipiell dargestellt und wird im Folgenden näher beschrieben.

Es zeigen:
- Fig. 1: eine mobile und autark einsetzbare Einrichtung zur Energieumwandlung von Sonnenenergie in elektrische Energie mit in Platten angeordneten Solarmodulen und einem Container,
- Fig. 2: eine mobile und autark einsetzbare Einrichtung zur Energieumwandlung von Sonnenenergie in elektrische Energie mit aufgeklappten Platten und Teilplatten,
- Fig. 3: eine Detailansicht von Platten mit Solarmodulen am ersten Rahmen,
- Fig. 4: eine Einrichtung in einer Draufsicht und
- Fig. 5: eine Einrichtung mit jeweils vier ersten und zweiten Rahmen und einem Container.

Eine mobil und autark einsetzbare Einrichtung zur Energieumwandlung von Sonnenenergie in elektrische Energie besteht im Wesentlichen aus einem Container 1 und Platten 2 mit Solarmodulen.

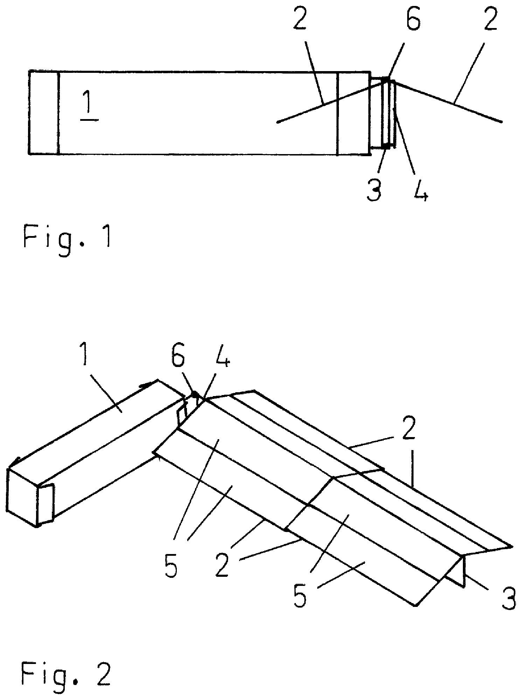

Die Fig. 1 zeigt eine mobile und autark einsetzbare Einrichtung zur Energieumwandlung von Sonnenenergie in elektrische Energie mit in Platten 2 angeordneten Solarmodulen und einem Container 1 in einer prinzipiellen Darstellung.

An einem ersten Rahmen 3 und einem zweiten Rahmen 4 befinden sich beidseitig und schwenkbar jeweils Platten 2 mit Solarmodulen. Im aufgeklappten Zustand sind die Rahmen 3, 4 Ständer der schräg angeordneten und eine Satteldachform ausbildenden Platten 2 mit Solarmodulen. Der erste Rahmen 3 mit Platten 2 mit Solarmodulen ist in oder an dem zweiten Rahmen 4 mit beidseitig schwenkbaren Platten 2 mit Solarmodulen verschiebbar angeordnet, so dass
im auseinander geschobenen Zustand die Rahmen 3, 4 mit den schräg angeordneten Platten 2 mit Solarmodulen die Form eines Satteldaches und
im ineinander geschobenen Zustand die Rahmen 3, 4 mit angeklappten Platten 2 mit angeklappten Teilplatten 5 jeweils mit Solarmodulen die Form eines Quaders vorhanden sind.

Die Fig. 2 zeigt eine mobile und autark einsetzbare Einrichtung zur Energieumwandlung von Sonnenenergie in elektrische Energie mit aufgeklappten Platten 2 und Teilplatten 5 in einer prinzipiellen Darstellung.

Der zweite Rahmen 4 ist mit wenigstens einem in den und aus dem Container 1 verfahrbaren Gelenk 6 verbunden, so dass die Rahmen 3, 4 mit den Platten 2 mit Solarmodulen senkrecht im Container 1 angeordnet sind. Im aus dem Container 1 gefahrenen zweiten Rahmen 4 sind die Rahmen 3, 4 gegenüber dem Container 1 schwenkbar. Damit können die Rahmen 3, 4 und die Platten 2 mit Solarmodulen winklig zum Container angeordnet werden.

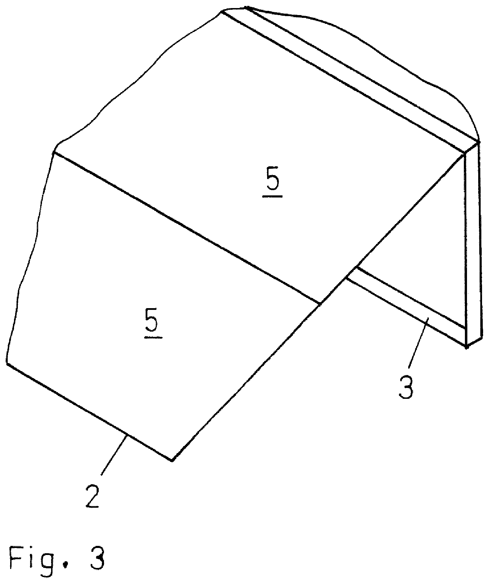

Die Fig. 3 zeigt eine prinzipielle Detailansicht von Platten 2 am ersten Rahmen 3 in einer prinzipiellen Darstellung.

Die Platten 2 mit Solarmodulen bestehen aus zwei Teilplatten 5, die über ein Gelenk miteinander verbunden sind. Damit ist eine der Teilplatten 5 als erste Teilplatte gegenüber der anderen Teilplatte 5 als zweite Teilplatte klappbar. Die Teilplatten 5 sind damit gegeneinander klappbar und zusammen an die Rahmen 3, 4 schwenkbar. Die Breiten der Teilplatten 5 sind dazu kleiner als die Höhe der Rahmen 3, 4. Der erste Rahmen 3 mit den angeklappten Platten 2 ist in oder am den zweiten Rahmen 4 schiebbar. Damit bilden die Rahmen 3, 4 mit den angeklappten Platten 2 mit Solarmodulen einen Quader, der mittels des Gelenks 6 geschwenkt in den Container 1 verfahrbar ist. Die Rahmen 3, 4 und die angeklappten Platten 2 mit Solarmodulen sind damit vertikal im Container 1 angeordnet.

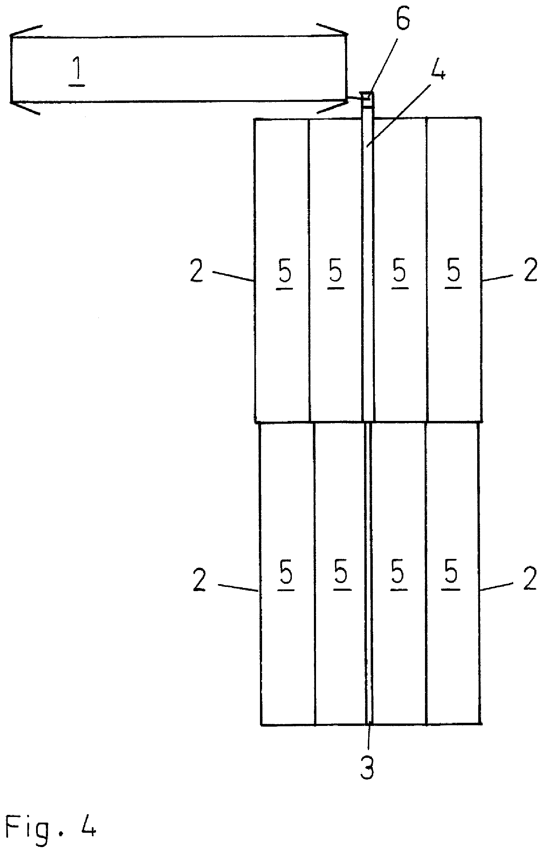

Die Fig. 4 zeigt eine Einrichtung in einer prinzipiellen Draufsicht.

Die Einrichtung besteht damit aus dem Container 1 und wenigstens einer Anordnung von aus zwei Teilplatten 5 bestehenden Platten 2 mit Solarmodulen an den über das Gelenk 6 schwenkbaren Rahmen 3, 4. Der Container 1 und die Anordnung sind so im Betriebszustand der Einrichtung winklig zueinander angeordnet.

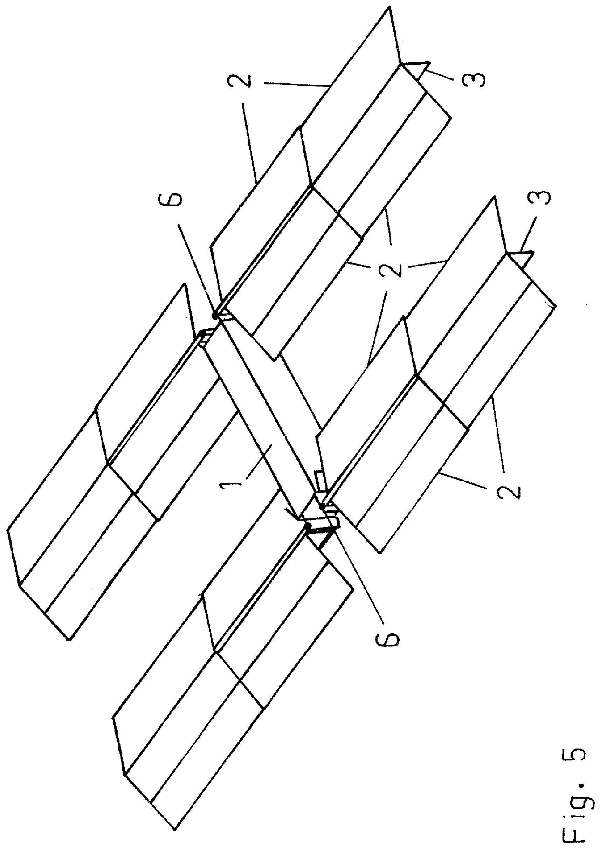

Die Fig. 5 zeigt eine Einrichtung mit jeweils vier ersten und zweiten Rahmen 3, 4 mit aufgeklappten Platten 2 mit Solarmodulen und einem Container 1 in einer prinzipiellen Darstellung.

Die Einrichtung besteht in einer Ausführungsform aus vier Anordnungen, die damit sechzehn Platten 2 mit Solarmodulen, vier erste Rahmen 3, vier zweite Rahmen 4, wenigstens vier Gelenke 6 und den Container 1 aufweist. Im Betriebszustand besitzt die Einrichtung in der Draufsicht eine H-Form mit den Anordnungen als Schenkel und dem Container 1 als Mittelteil.

Die Einrichtung besteht in einer weiteren Ausführungsform aus sechs Anordnungen, die damit vierundzwanzig Platten 2 mit Solarmodulen, sechs erste Rahmen 3, sechs zweite Rahmen 4, wenigstens sechs Gelenke 6 und den Container 1 aufweist. Im Betriebszustand besitzt die Einrichtung in der Draufsicht eine H-Form mit den Anordnungen als Schenkel entsprechend der Ausführungsform mit vier Anordnungen, zwei Anordnungen beidseitig in Verlängerung der Längsachse des Containers 1 und dem Container 1 als Mittelteil.

Im Container befinden sich Schienen für die Gelenke 6 und/oder die ersten Rahmen 3 und/oder die zweiten Rahmen 4. Diese können am Boden und an der Decke des Containers 1 angeordnet sein, so dass diese positionsgenau in den Container 1 schiebbar und damit darin platziert sind.

Geführte Elemente mit den Gelenken 6 und/oder der erste Rahmen 3 und/oder der zweite Rahmen 4 kann dazu Rollen oder Räder besitzen.

In einer Ausführungsform kann die Einrichtung zur Energieumwandlung wenigstens eine Windkraftanlage und/oder mindestens einen Akkumulator aufweisen.

Solarmodule und/oder Solarmodule in Verbindung mit einem Solarwechselrichter können die Bestandteile eines Stromkreises sein. Weiterhin können eine Steuereinrichtung und wenigstens ein elektrisches Heizelement weitere Bestandteile des Stromkreises sein, wobei das elektrische Heizelement ein Bestandteil eines Wasserspeichers und/oder einer Heizung ist. Darüber hinaus können die Steuereinrichtung und ein Ladegerät in Verbindung mit dem Akkumulator weitere Bestandteile des Stromkreises sein.

Der Akkumulator, eine Steuereinrichtung und ein Wechselrichter und/oder ein Gleichrichter können weitere Bestandteile des Stromkreises sein.

Darüber hinaus kann auch eine Steuereinrichtung und der Windgenerator der Windkraftanlage weitere Bestandteile des Stromkreises sein.

### Bezugszeichen

- 1: Container
- 2: Platte mit Solarmodulen
- 3: erster Rahmen
- 4: zweiter Rahmen
- 5: Teilplatte
- 6: Gelenk

## Patentansprüche

1. Mobil und autark einsetzbare Einrichtung zur Energieumwandlung von Sonnenenergie in elektrische Energie mit in Platten angeordneten Solarmodulen und einem Container (1), **dadurch gekennzeichnet, dass** die Platten (2) mit Solarmodulen wenigstens zwei gegeneinander klappbare Teilplatten (5) mit Solarmodulen aufweisen, dass sich beidseitig an einem ersten Rahmen (3) jeweils eine Platte (2) mit Solarmodulen schwenkbar befindet, wobei im aufgeklappten Zustand der erste Rahmen (3) ein Ständer der schräg angeordneten und eine Satteldachform ausbildenden Platten (2) mit Solarmodulen ist, dass der erste Rahmen (3) mit Platten (2) mit Solarmodulen in oder an einem zweiten Rahmen (4) mit beidseitig schwenkbaren Platten (2) mit Solarmodulen verschiebbar angeordnet ist, so dass im auseinander geschobenen Zustand die Rahmen (3, 4) mit den schräg angeordneten Platten (2) mit Solarmodulen die Form eines Satteldaches und im ineinander geschobenen Zustand die Rahmen (3, 4) mit angeklappten Platten (2) mit angeklappten Teilplatten (5) jeweils mit Solarmodulen die Form eines Quaders vorhanden ist, und dass der zweite Rahmen (5) gelenkig mit einem geführten Halteelement des Containers (1) zum Bewegen der Rahmen (3, 4) mit den Platten (2) mit den Solarmodulen in den und aus den Container (1) verbunden ist, so dass die Rahmen (3, 4) mit den Platten (2) mit Solarmodulen senkrecht im Container (1) angeordnet und außerhalb des Containers (1) gegenüber dem Container (1) schwenkbar sind.

2. Einrichtung nach Patentanspruch 1, **dadurch gekennzeichnet, dass** vier zweite Rahmen (4) mit jeweils einem ersten Rahmen (3) und Platten (2) mit Solarmodulen im oder am Container (1) angeordnet sind.

3. Einrichtung nach den Patentansprüchen 1 und 2, **dadurch gekennzeichnet, dass** jeweils zwei zweite Rahmen (4) mit jeweils einem ersten Rahmen (3) und Platten (2) mit Solarmodulen hintereinander oder nebeneinander an einer Seitenwand des Containers (1) angeordnet sind, wobei der Container (1) ein zweiseitig öffenbarer Container (1) ist.

4. Einrichtung nach Patentanspruch 1, **dadurch gekennzeichnet, dass** sich im Container (1) wenigstens eine Schiene für das Gelenk (6) und/oder den ersten Rahmen (3) und/oder den zweiten Rahmen (4) befindet oder befinden und dass der erste Rahmen (3) und/oder der zweite Rahmen (4) Rollen oder Räder besitzt oder besitzen.

5. Einrichtung nach Patentanspruch 1, **dadurch gekennzeichnet, dass** die Einrichtung zur Energieumwandlung wenigstens eine Windkraftanlage und/oder mindestens einen Akkumulator aufweist oder aufweisen.

6. Einrichtung nach Patentanspruch 1, **dadurch gekennzeichnet, dass** Solarmodule und/oder Solarmodule in Verbindung mit einem Solarwechselrichter Bestandteile eines Stromkreises sind.

7. Einrichtung nach Patentanspruch 6, **dadurch gekennzeichnet, dass** eine Steuereinrichtung und wenigstens ein elektrisches Heizelement weitere Bestandteile des Stromkreises sind.

8. Einrichtung nach Patentanspruch 7, **dadurch gekennzeichnet, dass** das elektrische Heizelement ein Bestandteil eines Wasserspeichers ist.

9. Einrichtung nach den Patentansprüchen 5 und 6, **dadurch gekennzeichnet, dass** eine Steuereinrichtung und ein Ladegerät in Verbindung mit dem Akkumulator weitere Bestandteile des Stromkreises sind.

10. Einrichtung nach den Patentansprüchen 5 und 6, **dadurch gekennzeichnet, dass** der Akkumulator, eine Steuereinrichtung und ein Wechselrichter und/oder ein Gleichrichter weitere Bestandteile des Stromkreises sind.

11. Einrichtung nach den Patentansprüchen 5 und 6, **dadurch gekennzeichnet, dass** eine Steuereinrichtung und der Windgenerator der Windkraftanlage weitere Bestandteile des Stromkreises sind.

## Claims

1. Mobile and self-sufficient device for converting solar energy into electrical energy, comprising solar modules arranged in panels, and a container (1), **characterised in that** the panels (2) comprising solar modules have at least two sub-panels (5) which comprise solar modules and can be folded towards one another, **in that** one panel (2) comprising solar modules is pivotably arranged on both sides of a first frame (3), the first frame (3) being, in the unfolded state, a support for the obliquely arranged panels (2) which comprise solar modules and form a gable roof shape, **in that** the first frame (3) having panels (2) comprising solar modules is movably arranged in or on a second frame (4) having on both sides pivotable panels (2) comprising solar modules such that, when pushed apart, the frames (3, 4) having the obliquely arranged panels (2) comprising solar modules are in the shape of a gable roof and, when pushed into one another, the frames (3, 4) having folded-up panels (2) that have folded-up sub-panels (5) in each case comprising solar modules are in the shape of a cuboid, and **in that** the second frame (5) is hingedly connected to a guided holding element of the container (1) for moving the frames (3, 4) having the panels (2) comprising the solar modules in and out of the container (1) such that the frames (3, 4) having the panels (2) comprising solar modules are arranged vertically in the container (1) and are pivotable relative to the container (1) outside the container (1).

2. Device according to claim 1, **characterised in that** four second frames (4) each having a first frame (3) and panels (2) comprising solar modules are arranged in or on the container (1).

3. Device according to claims 1 and 2, **characterised in that** in each case two second frames (4) each having a first frame (3) and panels (2) comprising solar modules are arranged one behind the other or next to one another on a side wall of the container (1), the container (1) being a container (1) that can be opened at two ends.

4. Device according to claim 1, **characterised in that** at least one rail for the joint (6) and/or the first frame (3) and/or the second frame (4) is/are located in the container (1), and **in that** the first frame (3) and/or the second frame (4) has/have castors or wheels.

5. Device according to claim 1, **characterised in that** the device for converting energy comprises at least one wind turbine and/or at least one accumulator.

6. Device according to claim 1, **characterised in that** solar modules and/or solar modules in connection with a solar inverter are components of a circuit.

7. Device according to claim 6, **characterised in that** a control device and at least one electrical heating element are further components of the circuit.

8. Device according to claim 7, **characterised in that** the electrical heating element is a component of a water storage tank.

9. Device according to claims 5 and 6, **characterised in that** a control device and a charger in connection with the accumulator are further components of the circuit.

10. Device according to claims 5 and 6, **characterised in that** the accumulator, a control device and an inverter and/or a rectifier are further components of the circuit.

11. Device according to claims 5 and 6, **characterised in that** a control device and the wind generator of the wind turbine are further components of the circuit.

## Revendications

1. Dispositif mobile et autonome permettant de convertir l'énergie solaire en énergie électrique et comportant des modules solaires disposés en panneaux et un conteneur (1), **caractérisé en ce que** les panneaux (2) comportant des modules solaires présentent au moins deux sous-panneaux (5) comportant des modules solaires qui peuvent être pliés les uns contre les autres, que respectivement un panneau (2) comportant des modules solaires est situé pivotant des deux côtés sur un premier cadre (3), le premier cadre (3) étant, à l'état déplié, un support des panneaux (2) disposés de façon oblique et formant une forme de toit à pignon et comportant des modules solaires, que le premier cadre (3) comportant des panneaux (2) comportant des modules solaires est disposé coulissant dans ou sur un second cadre (4) comportant des panneaux (2) pivotant des deux côtés et comportant des modules solaires, de sorte que lorsqu'ils sont écartés, les cadres (3, 4) comportant les panneaux (2) disposés de façon oblique et comportant des modules solaires présentent la forme d'un toit à pignon et, lorsqu'ils sont introduits l'un dans l'autre, les cadres (3, 4) comportant des panneaux (2) pliés dotés de sous-panneaux pliés (5) comportant respectivement des modules solaires présentent la forme d'un parallélépipède, et que le second cadre (5) est relié par articulation à un élément de maintien guidé du conteneur (1) afin de déplacer les cadres (3, 4) comportant les panneaux (2) comportant les modules solaires dans ou hors du conteneur (1) de sorte que les cadres (3, 4) comportant les panneaux (2) comportant les modules solaires sont disposés verticalement dans le conteneur (1) et pivotants par rapport au conteneur (1) à l'extérieur du conteneur (1).

2. Dispositif selon la revendication 1, **caractérisé en ce que** quatre seconds cadres (4) comportant respectivement un premier cadre (3) et des panneaux (2) comportant des modules solaires sont disposés dans ou sur le conteneur (1).

3. Dispositif selon les revendications 1 et 2, **caractérisé en ce que** respectivement deux seconds cadres (4) comportant respectivement un premier cadre (3) et des panneaux (2) comportant des modules solaires sont disposés l'un derrière l'autre ou l'un à côté de l'autre sur une paroi latérale du conteneur (1), le conteneur (1) étant un conteneur (1) qui peut être ouvert des deux côtés.

4. Dispositif selon la revendication 1, **caractérisé en ce qu'**au moins un rail destiné au joint (6) et/ou au premier cadre (3) et/ou au second cadre (4) est situé dans le conteneur (1) et que le premier cadre (3) et/ou le second cadre (4) possèdent des roulettes ou des roues.

5. Dispositif selon la revendication 1, **caractérisé en ce que** le dispositif de conversion d'énergie présente au moins une éolienne et/ou au moins un accumulateur.

6. Dispositif selon la revendication 1, **caractérisé en ce que** des modules solaires et/ou des modules solaires en liaison avec un onduleur solaire constituent un circuit électrique.

7. Dispositif selon la revendication 6, **caractérisé en ce qu'**un dispositif de commande et au moins un élément chauffant électrique constituent en outre le circuit électrique.

8. Dispositif selon la revendication 7, **caractérisé en ce que** l'élément chauffant électrique constitue un réservoir d'eau.

9. Dispositif selon les revendications 5 et 6, **caractérisé en ce qu'**un dispositif de commande et un appareil de charge en liaison avec l'accumulateur constituent en outre le circuit électrique.

10. Dispositif selon les revendications 5 et 6, **caractérisé en ce que** l'accumulateur, un dispositif de commande et un onduleur et/ou un redresseur constituent en outre le circuit électrique.

11. Dispositif selon les revendications 5 et 6, **caractérisé en ce qu'**un dispositif de commande et la génératrice pour éolienne de l'éolienne constituent en outre le circuit électrique.
